# EUROPÄISCHE PATENTSCHRIFT

(11) **EP 2 000 488 B1**
(45) Veröffentlichungstag und Bekanntmachung des Hinweises auf die Patenterteilung: **22.07.2009**
(21) Anmeldenummer: 08157569.8
(22) Anmeldetag: 04.06.2008
(51) Int. Cl.: C08G 18/54, C08G 18/10, C08J 9/33, C08J 9/35

(54) **Verfahren zur Herstellung eines Schaumstoffverbundteiles und ein solches Schaumstoffverbundteil**
Method for manufacturing a foam compound component and such a foam compound component
Procédé de fabrication d'une pièce composite en mousse et une telle pièce composite en mousse

(30) Priorität: 05.06.2007 DE 102007026266
(43) Veröffentlichungstag der Anmeldung: 10.12.2008
(73) Patentinhaber: METZELER SCHAUM GMBH, D-87700 Memmingen (DE)
(72) Erfinder: Geiger, Markus, 89281, Altenstadt (DE); Heitmann, Ulrich, 87700, Memmingen (DE); Hohenhorst, Manfred, 88430, Rot an der Rot (DE); Schmid, Albert, 97980, Bad Mergentheim (DE); Zäh, Melanie, 88319, Aitrach (DE)
(74) Vertreter: Schober, Christoph D.

(56) Entgegenhaltungen:
- DE-A1- 3 825 251
- DE-A1- 19 962 270
- DE-A1-5102004 041 12

## Beschreibung

Die vorliegende Erfindung betrifft ein Verfahren zur Herstellung eines Schaumstoffverbundteiles sowie ein solches Schaumstoffverbundteil.

Herkömmlicherweise werden Melaminharzschaumstoffe als Dämmstoffe zur Wärme- und Schalldämmung in verschiedenen Bereichen wie beispielsweise der Bauindustrie, der Kraftfahrzeugindustrie und im öffentlichen Transportbereich eingesetzt. Als vorteilhafte Eigenschaften der Melaminharzschaumstoffe gelten die offene Struktur, das geringe Gewicht, die schwere Entflammbarkeit und die hohe Temperaturbeständigkeit.

Üblicherweise werden Melaminharzschaumstoffe als Formteile oder als Blockware hergestellt und anschließend weiterverarbeitet. Beispielsweise werden die einzelnen Blöcke in Schaumstoffteile bestimmter Form zugeschnitten. Hierbei fallen umfangreiche Schnittreste an, die kostenaufwendig entsorgt werden müssen.

Ein Verfahren zur Herstellung von Polyurethan-Schaumstoff wird in der DE 10 2004 041 125 A1 beschrieben. Das Verfahren besteht in der Umsetzung von Polyisocyanaten mit Verbindungen mit mindestens zwei mit Isocyanatgruppen reaktiven Wasserstoffatomen. Die Umsetzung wird in Anwesenheit von geschäumten Melamin-Formaldehyd-Kondensationsgruppen und/oder Hydroxylgruppen enthaltenden Umsetzungsprodukten von geschäumtem Melamin-Formaldehyd-Kondensationsprodukten mit Alkylenoxiden durchgeführt.

Weiterhin ist aus der DE 38 25 251 A1 ein Verfahren zur Herstellung eines schwer entflammbaren Polyurethan-Verbundschaumstoffs bekannt. Zur Herstellung des Polyurethan-Verbundschaumstoffs werden Polyurethan-Schaumstoffflocken unter Beimengung eines Bindemittels durch Verpressen bei erhöhter Temperatur verfestigt, so dass die unbehandelten Schaumstoffflocken derart mit flammhemmend imprägnierten Schaumstoffflocken gemischt werden, dass der Anteil an flammhemmend imprägnierten Schaumstoffflocken vor dem Verpressen mindestens 30 Vol.-% beträgt. Als Bindemittel werden Isocyanate oder Isocyanat-Prepolymere verwendet. Die Polyurethan-Schaumstoffflocken können entweder eigens für das Verfahren hergestellt oder aus Abfall gewonnen werden.

Der Erfindung liegt die **Aufgabe** zugrunde, ein Verfahren zur Weiterverwendung von Schaumstoffteilen auf Melaminharzbasis anzugeben, mit dem ein Schaumstoffverbundteil hergestellt werden kann. Je nach Einsatzgebiet des Schaumstoffverbundteiles sollen vorzugsweise die einschlägigen Sicherheitsvorschriften erfüllt werden.

Zur **Lösung** dieser Aufgabe wird ein Verfahren zur Herstellung eines Schaumstoffverbundteiles vorgeschlagen, bei dem Melaminharzschaumstoffteile mittels eines organischen, brennbaren Bindemittels auf Basis eines Isocyanat-Prepolymers verbunden werden.

Es hat sich überraschender Weise herausgestellt, dass durch den Gebrauch eines organischen, brennbaren Bindemittels auf Basis eines Isocyanat-Prepolymers das Brandverhalten des Schaumstoffverbundteiles nicht oder nur unwesentlich beeinflusst wird. So kann ein Schaumstoffverbundteil erhalten werden, das in seinem Brandverhalten verschiedenste Brandschutznormen erfüllt. Es wurde herausgefunden, dass das Bindemittel nicht in die Melaminharzschaumstoffteile, insbesondere nicht in Melaminharzschaumstoffteile in Form von Flocken eindringt, sondern sich auf der Oberfläche der Melaminharzschaumstoffteile absetzt. Infolgedessen sind nur geringe Mengen Bindemittel zur Herstellung erforderlich, was auch zu einer kostengünstigeren Produktion führt. Diese sich überraschenderweise ergebende Eigenschaft ergibt sich insbesondere bei einem geeigneten Verhältnis der Gewichtsanteile von Bindemittel zu Melaminharzschaumstoffteilen.

Das mit dem Verfahren hergestellte Schaumstoffverbundteil kann auch als Flockenverbundschaumstoff, Flockenverbundteil oder Schaumstoffformteil bezeichnet werden. Die Melaminharz enthaltenen Schaumstoffteile sind vorzugsweise bei der Herstellung von auf Basis von Blockware hergestellten Schaumstoffkörpern anfallende Rest, insbesondere Schnittreste beim Zuschneiden der Blöcke, die vorzugsweise zu Schaumstoffflocken zerkleinert werden. Die Zerkleinerung der Schnittreste kann durch eine Schneidanlage, eine Schneidmühle oder dergleichen erfolgen, wobei vorzugsweise möglichst wenig Staub anfällt.

Mit anderen Worten betrifft die vorliegende Erfindung auch ein Recyclingverfahren zur Aufbereitung von Schaumstoffresten, Schaumstoffabfällen oder dergleichen, bei dem diese Schaumstoffteile mit dem organischen, brennbaren Bindemittel auf Basis eines Isocyanat-Prepolymers zu einem Schaumstoffverbundteil verbunden werden.

Vorzugsweise werden die Schaumstoffteile vorab zu Schaumstoffflocken zerkleinert und anschließend mit dem Bindemittel zur Bildung des Schaumstoffverbundteiles verbunden. Durch die Flockenbildung kann die wenigstens teilweise mit dem Bindemittel zu benetzende Oberfläche der Schaumstoffteile vergrößert werden. Auf diese Weise können Blöcke oder Formteile aus den Melaminharzschaumstoffresten hergestellt werden, die ein geeignetes Brandverhalten aufweisen und verschiedene Brandschutznormen erfüllen.

Als Bindemittel wird erfindungsgemäß ein Isocyanat-Prepolymer verwendet. Vorteilhafterweise werden als Bindemittel bevorzugt NCO-Polyurethan-Prepolymere auf Basis von aliphatischen und aromatischen Diisocyanaten und Polyolen eingesetzt, vorzugsweise auf Basis von Hexamethylendiisocyanat (HDI), Isophorondiisoyanat (IPDI), Methylendiphenyldiisocyanat (MDI), Toluylendiisocyanat (TDI) und weiter vorzugsweise MDI und TDI-Prepolymere mit Polyetherpolyolen.

Mit dem erfindungsgemäßen Verfahren können Schaumstoffverbundteile mit einem Raumgewicht von etwa 15 bis etwa 100 kg/m³, vorzugsweise von etwa 20 bis 60 kg/m³, und/oder mit einer Stauchhärte, ermittelt nach DIN EN ISO 3386-1, von etwa 5 kPa bis etwa 25 kPa, vorzugsweise von etwa 8 kPa bis 20 kPa erhalten werden.

Eine Überprüfung der mit dem erfindungsgemäßen Verfahren hergestellten Schaumstoffverbundteile ergab, dass verschiedenste Brandschutznormen erfüllt werden können. So wurden beispielsweise bei einer Prüfung des Brennverhaltens von Bodenbelägen und Bodenbeschichtungen nach DIN 4102-14 (1990) die Anforderungen der Brennbarkeitsklasse B1 erfüllt. Bei einer Prüfung des Brennverhaltens und der Brandnebenerscheinungen von Werkstoffen und Bauteilen für Schienenfahrzeuge nach DIN 54837 (2003) konnten bei einer Materialstärke von 50 mm die Anforderungen der Brennbarkeitsklasse S-4, der Rauchentwicklungsklasse SR-2 und der Tropfbarkeitsklasse ST-2 erfüllt werden. Weiterhin konnten bei einer Überprüfung eines Bauteils mit einer Materialstärke von 10 mm gemäß vorgenannter Norm die Anforderungen der Brennbarkeitsklasse S-3, der Rauchentwicklungsklasse SR-2 und der Tropfbarkeitsklasse ST-2 erfüllt werden, beispielsweise B1 nach DIN 4102. Des Weiteren ist im Vergleich zu als Blockware hergestellten herkömmlichen Melaminharzschaumstoffteilen (Primärmaterial) das Schallabsorptionsverhalten im Frequenzbereich von etwa 400 bis etwa 5000 Hz verbessert.

Bei einer bevorzugten Weiterbildung des Verfahrens werden die Melaminharzschaumstoffteile in eine Form eingebracht, das Bindemittel wird in die Form eingebracht, die Melaminharzschaumstoffteile werden mit dem Bindemittel vermischt, das erzeugte Mischgut wird zu dem Schaumstoffverbundteil gepresst und das Schaumstoffverbundteil wird aus der Form entnommen. Vorteilhafterweise ist der Pressvorgang auf das gewünschte Raumgewicht des Schaumstoffverbundteiles abgestimmt.

In einer weiteren bevorzugten Weiterbildung wird das Schaumstoffverbundteil nach dem Entformen getrocknet. Abschließend kann das Verbundteil mit den bekannten Verarbeitungsverfahren veredelt werden.

Eine vorteilhafte Weiterbildung besteht darin, dass die Melaminharzschaumstoffteile in Schaumstoffflocken zerkleinert werden. Dies erfolgt vorzugsweise vor dem Einbringen in die Form. Auf diese Weise wird die Oberfläche der Melaminharzschaumstoffteile erhöht, so dass eine verbesserte Vernetzung von Bindemittel und Melaminharzschaumstoffteilen beziehungsweise Schaumstoffflocken eintreten kann.

Vorteilhafterweise wird das Bindemittel in die Form eingesprüht. Dies ermöglicht eine feine Verteilung auf der Oberfläche der Melaminharzschaumstoffteile beziehungsweise Flocken. Zudem kann weiter verhindert werden, dass das Bindemittel in einem unerwünscht großen Maße in die einzelnen Flocken beziehungsweise Melaminharzschaumstoffteile eindringt.

Um einen geeigneten Verbund der Flocken beziehungsweise der Melaminharzschaumstoffteile zu erzielen, wird das Mischgut beziehungsweise das Schaumstoffverbundteil mit einem Heißdampf, insbesondere mit Wasserdampf, beaufschlagt. Auf diese Weise wird der Kleber aktiviert. Ferner kann eine geeignete Aushärtung des Verbundes erreicht werden.

In vorteilhafter Ausgestaltung beträgt das Verhältnis der Gewichtsanteile von Bindemittel zu Melaminharzschaumstoffteilen etwa 0,05 bis etwa 0,50. Vorzugsweise beträgt dieses Verhältnis etwa 0,10 bis etwa 0,40, weiter vorzugsweise etwa 0,20 bis etwa 0,30.

Überdies wird zur Lösung der oben genannten Aufgabe in Übereinstimmung mit Anspruch 8 ein Schaumstoffverbundteil vorgeschlagen, welches Melaminharzschaumstoffteile umfasst, die mittels eines organischen, brennbaren Bindemittels auf Basis eines Isocyanat-Prepolymers verbunden sind. Ein solchermaßen gebildetes Schaumstoffverbundteil macht sich insbesondere die Vorteile des erfindungsgemäßen Verfahrens zu Nutze.

In besonders bevorzugter Ausgestaltung ist das Schaumstoffverbundteil aus Melaminharzschaumstoff enthaltenen Schaumstoffflocken gebildet, die mittels des organischen, brennbaren Isocyanat-Prepolymer-Binders verklebt sind.

Bei einer bevorzugten Ausführungsform beträgt das Verhältnis der Gewichtsanteile von Bindemittel zu Melaminharzschaumstoffteilen etwa 0,05 bis etwa 0,5. Weiter vorzugsweise beträgt dieses Verhältnis etwa 0,10 bis etwa 0,40 insbesondere etwa 0,20 bis etwa 0,30.

Ferner kann das Schaumstoffverbundteil ein Raumgewicht von etwa 15 bis etwa 100 kg/m³, vorzugsweise etwa 20 bis 60 kg/m³ und/oder eine Stauchhärte, ermittelt nach DIN EN ISO 3386-1, von etwa 5 kPa bis etwa 25 kPa, vorzugsweise von etwa 8 kPa bis 20 kPa aufweisen.

Das Bindemittel ist erfindungsgemäß ein Isocyanat-Prepolymer, insbesondere eines der oben genannten NCO-Polyurethan-Prepolymere.

Mit dem erfindungsgemäßen Verfahren und dem dadurch hergestellten Schaumstoffverbundteil können die hohen Entsorgungskosten für die in der

Produktion von Melaminharzschaumstoffteilen anfallenden Schnittreste vermieden werden und zugleich schwer entflammbare Schaumstoffverbundteile leichten Gewichts hergestellt werden, die in zahlreichen Bereichen eingesetzt werden können.

Ein solches Schaumstoffverbundteil findet beispielsweise in den eingangs genannten Einsatzgebieten, vorzugsweise im öffentlichen Transportwesen, Anwendung und kann beispielsweise für Schallabsorptionsteile in Omibussen, Eisenbahnwagons und für Sitzpolster verwendet werden.

## Patentansprüche

1. Verfahren zur Herstellung eines Schaumstoffverbundteiles, **dadurch gekennzeichnet, dass** Melaminharzschaumstoffteile mittels eines organischen, brennbaren Bindemittels auf Basis eines Isocyanat-Prepolymers verbunden werden.

2. Verfahren nach Anspruch 1, **dadurch gekennzeichnet, dass** die Melaminharzschaumstoffteile in eine Form eingebracht werden, das Bindemittel in die Form eingebracht wird, die Melaminharzschaumstoffteile mit dem Bindemittel vermischt werden, das erzeugte Mischgut zu dem Schaumstoffverbundteil gepresst wird und das Schaumstoffverbundteil aus der Form entnommen wird.

3. Verfahren nach einem der Ansprüche 1 oder 2, **dadurch gekennzeichnet, dass** die Melaminharzschaumstoffteile in Schaumstofflocken zerkleinert werden.

4. Verfahren nach einem der Ansprüche 1 bis 3, **dadurch gekennzeichnet, dass** das Bindemittel in die Form eingesprüht wird.

5. Verfahren nach einem der Ansprüche 1 bis 4, **dadurch gekennzeichnet, dass** das Mischgut oder Schaumstoffverbundteil mit einem Heißdampf beaufschlagt wird.

6. Verfahren nach einem der Ansprüche 1 bis 5, **dadurch gekennzeichnet, dass** das Verhältnis der Gewichtsanteile von Bindemittel zu Melaminharzschaumstoffteilen etwa 0,05 bis etwa 0,50 beträgt.

7. Verfahren nach einem der Ansprüche 1 bis 6, **dadurch gekennzeichnet, dass** das Verhältnis der Gewichtsanteile von Bindemittel zu Melaminharzschaumstoffteilen etwa 0,10 bis etwa 0,40, vorzugsweise etwa 0,20 bis etwa 0,30, beträgt.

8. Schaumstoffverbundteil umfassend Melaminharzschaumstoffteile, die mittels eines organischen, brennbaren Bindemittels auf Basis eines Isocyanat-Prepolymers verbunden sind.

9. Schaumstoffverbundteil nach Anspruch 8, **dadurch gekennzeichnet, dass** das Verhältnis der Gewichtsanteile von Bindemittel zu Melaminharzschaumstoffteilen etwa 0,05 bis etwa 0,50 beträgt.

10. Schaumstoffverbundteil nach einem der Ansprüche 8 oder 9, **dadurch gekennzeichnet, dass** das Verhältnis der Gewichtsanteile von Bindemittel zu Melaminharzschaumstoffteilen etwa 0,10 bis etwa 0,40, vorzugsweise etwa 0,20 bis etwa 0,30, beträgt.

11. Schaumstoffverbundteil nach einem der Ansprüche 8 bis 10, **gekennzeichnet durch** ein Raumgewicht von etwa 15 bis etwa 100 kg/m³, vorzugsweise von etwa 20 bis 60 kg/m³.

12. Schaumstoffverbundteil nach einem der Ansprüche 8 bis 11, **gekennzeichnet durch** eine Stauchhärte, ermittelt nach DIN EN ISO 3386-1, von etwa 5 kPa bis etwa 25 kPa, vorzugsweise von etwa 8 kPa bis 20 kPa.

## Claims

1. A method of manufacturing a composite foamed-plastic part, **characterised in that** melamine resin foam pieces are joined by means of an organic, flammable binder on the basis of an isocyanate prepolymer.

2. The method according to claim 1, **characterised in that** the melamine resin foam pieces are introduced into a mould, the binder is introduced into the mould, the melamine resin foam pieces are mixed with the binder, the resulting mixed material is pressed to obtain the composite foamed-plastic part, and the composite foamed-plastic part is removed from the mould.

3. The method according to claim 1 or 2, **characterised in that** the melamine resin foam pieces are reduced to foamed-plastic flakes.

4. The method according to any one of claims 1 to 3, **characterised in that** the binder is sprayed into the mould.

5. The method according to any one of claims 1 to 4, **characterised in that** superheated steam is applied to the mixed material or composite foamed-plastic part.

6. The method according to any one of claims 1 to 5, **characterised in that** the ratio of the percentages by weight of the binder to the melamine resin foam pieces is about 0.05 to about 0.50.

7. The method according to any one of claims 1 to 6, **characterised in that** the ratio of the percentages by weight of the binder to the melamine resin foam pieces is about 0.10 to about 0.40, preferably about 0.20 to about 0.30.

8. A composite foamed-plastic part, comprising melamine resin foam pieces joined by means of an organic, flammable binder on the basis of an isocyanate prepolymer.

9. The composite foamed-plastic part according to claim 8, **characterised in that** the ratio of the percentages by weight of the binder to the melamine resin foam pieces is about 0.05 to about 0.50.

10. The composite foamed-plastic part according to claim 8 or 9, **characterised in that** the ratio of the percentages by weight of the binder to the melamine resin foam pieces is about 0.10 to about 0.40, preferably about 0.20 to about 0.30.

11. The composite foamed-plastic part according to any one of claims 8 to 10, **characterised by** a bulk density of about 15 to about 100 kg/m³, preferably about 20 to 60 kg/m³.

12. The composite foamed-plastic part according to any one of claims 8 to 11, **characterised by** a compression stress value, determined according to DIN EN ISO 3386-1, of about 5 kPa to about 25 kPa, preferably of about 8 kPa to 20 kPa.

## Revendications

1. Procédé pour la fabrication d'une pièce composite en mousse, **caractérisé en ce que** des parties en mousse de résine de mélamine sont réunies au moyen d'un liant organique combustible sur la base d'un pré-polymère isocyanate.

2. Procédé selon la revendication 1, **caractérisé en ce que** les parties en mousse de résine de mélamine sont amenées dans un moule, le liant est introduit dans le moule, les parties en mousse de résine de mélamine sont mélangées avec le liant, le produit mélangé ainsi généré est pressé pour donner la pièce composite en mousse, et la pièce composite en mousse est enlevée du moule.

3. Procédé selon l'une des revendications 1 ou 2, **caractérisé en ce que** les parties en mousse de résine de mélamine sont broyées en flocons de mousse.

4. Procédé selon l'une des revendications 1 à 3, **caractérisé en ce que** le liant est introduit dans le moule par pulvérisation.

5. Procédé selon l'une des revendications 1 à 4, **caractérisé en ce que** le produit mélangé ou la pièce composite en mousse est pressurisée à la vapeur chaude.

6. Procédé selon l'une des revendications 1 à 5, **caractérisé en ce que** la proportion des parts pondérales du liant vis-à-vis des parties en mousse de résine de mélamine s'élève d'environ 0,05 à environ 0,50.

7. Procédé selon l'une des revendications 1 à 6, **caractérisé en ce que** la proportion des parts pondérales du liant vis-à-vis des parties en mousse de résine de mélamine s'élève d'environ 0,10 à environ 0,40, de préférence d'environ 0,20 à environ 0,30.

8. Pièce composite en mousse comprenant des parties en mousse de résine de mélamine qui sont liées au moyen d'un liant organique combustible basé sur un pré-polymère isocyanate.

9. Pièce composite en mousse selon la revendication 8, **caractérisée en ce que** la proportion des parts pondérales du liant vis-à-vis des parties en mousse de résine de mélamine s'élève d'environ 0,05 à environ 0,50.

10. Pièce composite en mousse selon l'une des revendications 8 ou 9, **caractérisée en ce que** la proportion des parts pondérales du liant vis-à-vis des parties en mousse de résine de mélamine s'élève d'environ 0,10 à environ 0,40, de préférence d'environ 0,20 à environ 0,30.

11. Pièce composite en mousse selon l'une des revendications 8 à 10, **caractérisée par** une densité d'environ 15 à environ 100 kg/m³, de préférence environ 20 à 60 kg/m³.

12. Pièce composite en mousse selon l'une des revendications 8 à 11,
**caractérisée par** une dureté, déterminée d'après la norme DIN EN ISO 3386-1, d'environ 5 kPa à environ 25 kPa, de préférence d'environ 8 kPa à 20 kPa.
